# EUROPEAN PATENT APPLICATION

(11) **EP 0 974 973 A1**
(43) Date of publication of application: **26.01.2000**
(21) Application number: 98951739.6
(22) Date of filing: 09.11.1998
(51) Int. Cl.: G11B 23/033

(54) **A DISK CARTRIDGE**

(30) Priority: 14.11.1997 JP 31408497
(71) Applicant: Sony Corporation, Tokyo 141-0001 (JP)
(72) Inventor: MASUGI, Shinji-Sony Corporation, Tokyo 141-0001 (JP); KOSHIKA, Mika-Sony Corporation, Tokyo 141-0001 (JP)
(74) Representative: Körber, Wolfhart, Dr. rer.nat.
(86) International application number: JP9805031
(87) International publication number: WO9926251

(57) **Abstract**

A disc cartridge is disclosed in which a magnetic disc 2 is housed in a housing casing 3 made up of an upper shell 4 to which is bonded an upper liner 70 and a lower shell 5 to which is bonded a lower liner 71. A gap t1 between the magnetic disc 2 and the upper liner 70or a gap t2 between the magnetic disc 2 and the lower liner 71, whichever is smaller, is set so as to be larger than 0 mm and smaller than 0.5 mm. With the disc cartridge, an air stream between the magnetic disc 2 and the upper liner 70 and/or the lower liner 71 operates for suppressing surface deviations of the magnetic disc 2 to realize high recording density.

## Description

### Technical Field

This invention relates to a disc cartridge having a disc-shaped recording medium housed in a housing casing made up of a pair of shells.

### Background Art

As a disc cartridge used as an external storage medium for e.g., a computer, a 3.5 inch micro-flexible disc cartridge, referred to herein as a 3.5 inch MFD, is used extensively.

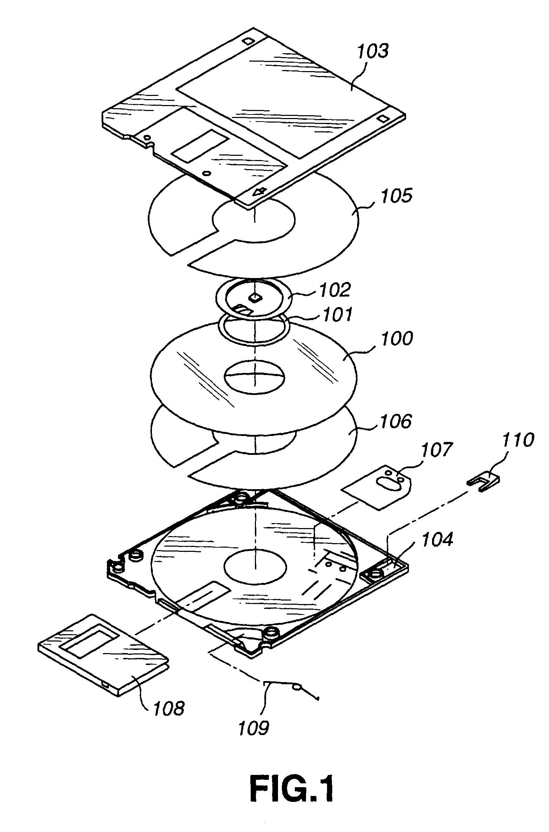

Referring to Fig.1, the 3.5 inch MFD is made up of a magnetic disc 100, as a disc-shaped recording medium, a center hub 102 mounted on the magnetic disc 100 via ring 101, an upper shell 103 and a lower shell 104 for protecting the magnetic disc 100 from an external force, a first liner 105 mounted on the upper shell 103, a second liner 106 mounted on the lower shell 104, a lifter 107 mounted on the lower shell 104, a shutter 108 opened and closed on mounting and dismounting on or from a recording/reproducing apparatus, a shutter spring 109 biasing the shutter 108 in a closing direction, and a mistaken recording preventative member 110 for setting whether or not writing can be done on the magnetic disc 100.

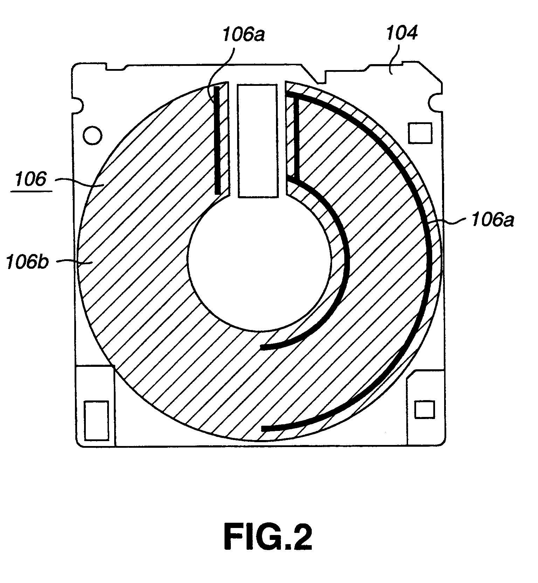

The first liner 105 and the second liner 106 are used for removing dust and dirt affixed to the magnetic disc 100 and for preventing scratching on the magnetic disc 100, and is formed of, for example, non-woven cloth. The second liner 106 is mounted, such as by thermal fusion, to the lower shell 104, as shown in Fig.2. Similarly to the first liner 105, the second liner 106 is mounted on the lower shell 104 by thermal fusion, as shown in Fig.2. In Fig.2, a black coated portion 106a is the thermally fused portion, while a hatched portion 106b, other than the black coated portion 106a, is not thermally fused.

That is, the first and second liners 105, 106 are thermally fused to the shells only at pre-set marginal portions. The portions of the second liner 106 not thermally fused are biased towards the magnetic disc 100 by a lifter 107 arranged between the second liner 106 and the lower shell 104. This causes the first and second liners 105, 106 to be contacted with the magnetic disc 100 to increase the effect of removing dust and dirt by the first and second liners 105, 106.

It is desired for the disc cartridge, used as an external recording medium, such as a computer, to be increased further in recording density. Thus, a disc cartridge having a high recording density ha been devised, in which the number of disc rotation at the time of recording/reproduction is set to 3000 rpm, in contradistinction from the rpm of the conventional 3.5 inch MFD which is 300 to 360 rpm.

However, if the disc rpm is increased to increase the recording density, and the disc undergoes significant surface deviations, it becomes impossible to effectuate regular recording/reproduction. Thus, for raising the disc rpm for achieving high recording density, it is necessary to suppress disc surface deviations more intensively than in the case of the conventional 3.5 inch MFD.

On the other hand, if the disc rpm is increased to improve the recording density, dust and dirt of extremely small size tend to cause dropout. That is, if the disc rpm is increased to improve the recording density, even dust and dirt of extremely small size, which so far raise no problem, give rise to data errors. Thus, for raising the disc rpm for achieving high recording density, it is necessary to prevent deposition of dust and dirt on the disc surface more intensively than in the case of the conventional 3.5 inch MFD.

Since dropout by the disc surface deviations or dropout by dust and dirt raises problems, it has been difficult with the conventional 3.5 inch MFD to achieve practically sufficient reliability if simply the rpm is increased for the purpose of improving the recording density.

### Disclosure of the Invention

It is therefore an object of the present invention to provide a disc cartridge which can be improved further in recording density.

A disc cartridge according to the present invention includes a disc-shaped recording medium for recording and/or reproduction on being run in rotation at an rpm exceeding 3000, and a housing casing including a first housing casing member arranged towards one of the major surfaces of the disc-shaped recording medium and a second housing casing member arranged towards the other major surface of the disc-shaped recording medium. The housing casing houses the disc-shaped recording medium between the first housing casing and the second housing casing. A gap between the disc-shaped recording medium and the first housing casing or a gap between the disc-shaped recording medium and the second housing casing, whichever is narrower, is set so as to be larger than 0 mm and smaller than 0.5 mm.

With the present disc cartridge, the gap between the housing casing member and the disc-shaped recording medium which is at least smaller on running the disc-shaped recording medium in rotation on the recording/reproducing apparatus is set so as to be smaller than 0.5 mm. Therefore, with the present disc cartridge, an air stream produced between the housing casing member and the disc-shaped recording medium operates for suppressing surface deviations of the disc-shaped recording medium. Since the gap is set so as to be larger than 0 mm, there is no risk of the housing casing member being contacted with the disc-shaped recording medium on rotationally driving the disc-shaped recording medium. The result is that, on rotationally driving the disc-shaped recording medium, there is no risk of the disc-shaped recording medium becoming worn out due to contact with the housing casing member.

Preferably, at least one of the first housing casing member and the second housing casing member of the disc cartridge includes a liner bonded to the surface facing the disc-shaped recording medium. By this liner, it is possible to remove dust and dirt affixed to the disc-shaped recording medium or to prevent attrition otherwise produced to the disc-shaped recording medium and the housing casing member.

If the liner is provided, the liner is preferably made up of a protective layer facing and protecting the disc-shaped recording medium and a thermally fusible layer fused on heating, with the thermally fusible layer and the protective layer being bonded together on heating the thermally fusible layer. By providing the liner with the thermally fusible layer and thermally fusing the thermally fusible layer to bond the thermally fusible layer and the protective layer, the liner can be bonded in position without damaging the protective layer facing the disc-shaped recording medium in contradistinction to the case of directly heat-fusing the liner to the housing casing member. The result is that no dust and dirt are produced from the liner due to damages produced at the time of bonding the liner.

If the thermally fusible layer is provided on the liner and thermally fused for bonding, the entire surface or part of the surface of the thermally fusible layer may be thermally fused for bonding. If the entire surface of the thermally fusible layer is thermally fused, the entire surface of the liner is bonded, so that flatness variations on the upper liner surface are decreased to render it possible to reduce variations in the magnitude of the gap between the liner and the disc-shaped recording medium. On the other hand, if part of the liner surface is thermally fused, a smaller quantity of heat applied during thermal fusion suffices, so that thermal fusion can be achieved rather easily. In any case, if the heat quantity per unit area is larger, warping or the like deformation is produced on the member to which is bonded the liner. Therefore, excess heating is not desirable.

In another aspect, the present invention provides a disc cartridge including a disc-shaped recording medium, and a housing casing including a first shell arranged towards one of the major surfaces of the disc-shaped recording medium and a second shell arranged towards the other major surface of the disc-shaped recording medium. The housing casing is adapted for housing the disc-shaped recording medium between the first and second shells. The surface of at least one of the first shell and the second shell facing the disc-shaped recording medium has a liner bonded thereto. The liner has at least a protective layer facing and protecting the disc-shaped recording medium and a thermally fusible layer layered thereon and which is adapted to be bonded to the shell on thermal fusion of the thermally fusible layer.

With the present disc cartridge, the liner is bonded to the shell by providing the liner with the protective layer and the thermally fusible layer and by thermally fusing the thermally fusible layer. Therefore, with the present disc cartridge, the protective layer facing the disc-shaped recording medium is not damaged when bonding the liner in position in contradistinction from the case of pressing and directly thermally fusing the liner to the housing casing member. Thus, with the present disc cartridge, there is no risk of dust and dirt being produced due to damage produced at the time of bonding the liner.

Preferably, the softening point of the thermally fusible layer of the liner is lower than the softening temperature of the protective layer layered on the thermally fusible layer and also lower than the softening temperature of the shell to which is bonded the liner having the thermally fusible layer. In this manner, there is no risk of the softening of the protective layer layered on the thermally fusible layer or the shell bonded to the liner thus facilitating and optimizing liner bonding.

If the thermally fusible layer is provided on the liner and thermally fused, it is possible to thermally fuse the entire surface or part of the surface of the thermally fusible layer. If the entire surface of the thermally fusible layer is thermally fused, the entire surface of the liner is bonded, so that flatness variations on the upper liner surface are decreased to render it possible to reduce variations in the magnitude of the gap between the liner and the disc-shaped recording medium. On the other hand, if part of the liner surface is thermally fused, a smaller quantity of heat applied during thermal fusion suffices, so that thermal fusion can be achieved rather easily. In any case, if the heat quantity per unit area is larger, warping or the like deformation is produced on the member to which is bonded the liner. Therefore, excess heating is not desirable.

With the disc cartridge according to the present invention, the gap produced between the housing casing member and the disc-shaped recording medium on rotationally driving the disc-shaped recording medium is narrowed to prevent surface deviations in the disc-shaped recording medium by the operation of an air stream between the housing casing member and the disc-shaped recording medium. Therefore, with the present disc cartridge, surface deviation of the disc-shaped recording medium are scarcely produced, while the rotation of the disc-shaped recording medium is stabilized. The disc cartridge according to the present invention thus provides a cartridge structure capable of assuring especially stabilized signal recording/reproduction in realizing high recording density. Also, with the present disc cartridge, since the protective layer and the thermally fusible layer are provided in the liner which is bonded to the shell by thermally fusing the thermally fusible layer, the liner can be bonded in position without damaging the protective layer facing the disc-shaped recording medium. Thus, with the disc cartridge according to the present invention, there is no risk of the dust and dirt being produced from the liner due to damage to the liner produced at the time of bonding thus reducing occurrence of dropout ascribable to the dust and dirt originating from the liner. Therefore, with the disc cartridge according to the present invention, there may be provided a high-quality cartridge structure which is relatively free from errors even on high density recording.

### Brief Description of the Drawings

Fig.1 is an exploded perspective view showing an example of a conventional disc cartridge.
Fig.2 is a plan view showing the state in which a liner has been mounted on a shell of a conventional disc cartridge.
Fig.3 is a perspective view showing an example of a disc cartridge embodying the present invention.
Fig.4 is a perspective view of a disc cartridge of Fig.3 looking from the bottom side.
Fig.5 is an exploded perspective view showing the disc cartridge of Fig.3, looking from the bottom side of the disc cartridge, with part of the disc cartridge being broken away.
Fig.6 is a plan view of an upper shell of the disc cartridge shown in Fig.3.
Fig.7 is a plan view of a lower shell of the disc cartridge shown in Fig.3.
Fig.8 is a plan view showing the state of closure of a recording/reproducing aperture of the disc cartridge of Fig.3 being closed by a shutter member, looking from the bottom side of the disc cartridge.
Fig.9 is a plan view showing the state of opening of a recording/reproducing aperture of the disc cartridge of Fig.3 being opened by movement of a shutter member, looking from the bottom side of the disc cartridge.
Fig.10 is a cross-sectional view showing the cross-section of the disc cartridge of Fig.3, taken along line X1-X2 of Fig.9.
Fig.11 is a plan view showing the state in which an upper liner is mounted on the inner wall of the upper shell of the disc cartridge shown in Fig.3.
Fig. 12 is a plan view showing the state in which a lower liner is mounted on the inner wall of the lower shell of the disc cartridge shown in Fig.3.
Fig. 13 is a plan view showing an example of a pattern of the thermally fused area by thermally fusing the upper liner to the lower liner.
Fig.14 is a plan view showing an example of a pattern of the thermally fused area by thermally fusing the lower liner to the lower liner.
Fig. 15 is a plan view showing another example of a pattern of the thermally fused area by thermally fusing the upper liner to the lower liner.
Fig. 16 is a plan view showing another example of a pattern of the thermally fused area by thermally fusing the lower liner to the lower liner.
Fig. 17 shows the results of scrutiny into the relation between the magnitude of the gap between a liner and a magnetic disc and the magnitude of surface deviations of a magneto-optical disc.
Fig. 18 shows the relation between the relative positions of the magnetic disc and the upper and lower liners and the magnitude of surface deviations of a magneto-optical disc.

### Best Mode for Carrying Out the Invention

Referring to the drawings, preferred embodiments of the present invention will be explained in detail.

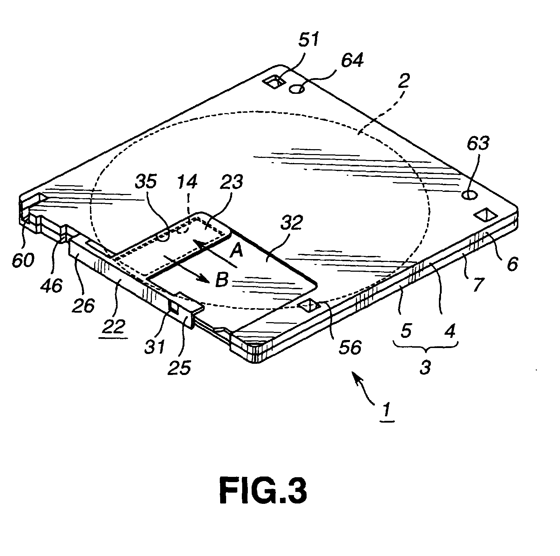

Fig.3 shows an embodiment of a disc cartridge embodying the present invention. This disc cartridge 1 is comprised of a magnetic disc 2 of a diameter of 3.5 inch rotatably housed in a housing casing 3.

The housing casing 3 is made up of an upper shell 4 and a lower shell 5 each being molded from a synthetic resin material substantially in the shape of a shallow rectangular saucer and abutted and connected together to form a thin box in their entirety.

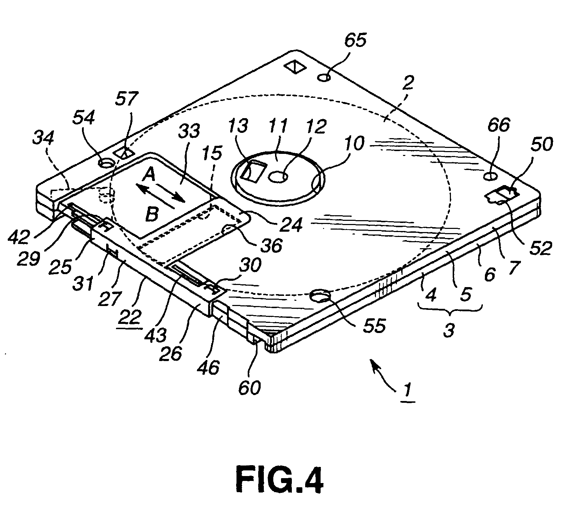

Referring to Figs. 3 and 4, there are protuberantly formed outer peripheral wall sections 6, 7 abutted to each other to constitute an outer peripheral wall section of the housing casing 3. The outer peripheral wall sections 6, 7 have front side surfaces cut off partially. On the facing inner surfaces of the upper shell 4 and the lower shell 5 are integrally formed disc housing delimiting wall section abutted together to define a circular disc housing.

On the facing inner surfaces of the upper shell 4 and the lower shell 5, there are integrally formed, in the vicinity of the corners of the outer peripheral wall sections 6, 7, a plurality of engagement projections and insertion holes traversed by these engagement projections at facing position to each other. On the outer periphery of each engagement projection provided on the upper shell 4 is integrally provided an annular abutting portion the distal end of which is abutted against the outer periphery of each insertion through-hole of the lower shell 5 when each engagement projection is inserted into the insertion hole.

When the upper shell 4 and the lower shell 5 are abutted and connected together, the two shells 4, 5 are assembled so that the outer peripheral wall sections 6, 7 are abutted against the disc housing delimiting wall sections, with the engagement projections engaging in the insertion holes and with the distal ends of the abutting portions compressing against the outer periphery of the insertion holes of the lower shell 5. The distal ends of the engagement projections of the upper shell 4 and the lower shell 5, protruded from the insertion holes, are fined to form retainers for retaining the outer rim portions of the insertion holes for unifying the upper and lower halves 4, 5.

The lower shell 5 is formed with an opening 10 for a circular table for constituting a center hole of the disc container, as shown in Fig.4. When the disc cartridge 1 is loaded on a recording/reproducing apparatus, a turntable of the recording/reproducing apparatus, adapted for rotationally driving a magnetic disc 2 housed in the housing casing 3 is adapted to face to outside via the lower shell 5. This opening 10 exposes a center hub 11, mounted on the magnetic disc 2 for closing the center opening of the magnetic disc 2 housed in the housing casing 3, via the lower shell 5 to outside.

The center hub 11 is formed by a flange on the outer rim of a fitting portion of substantially the same diameter as the center opening of the magnetic disc 2,and is substantially formed as a coupling in its entirety. The center hub 11 has a center opening 12 into which is inserted a rotary shaft of the turntable. In the vicinity of the center hole 12 of the center hub 11 is formed an engagement portion 13 engaged by a driving member provided on the turntable.

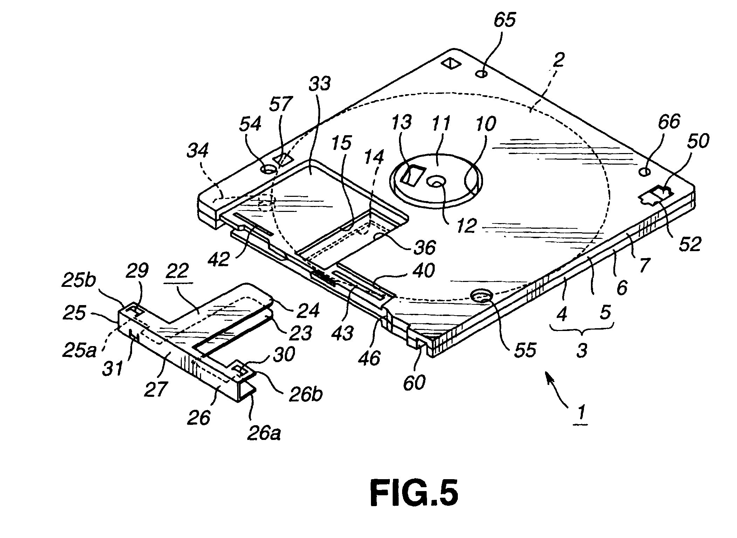

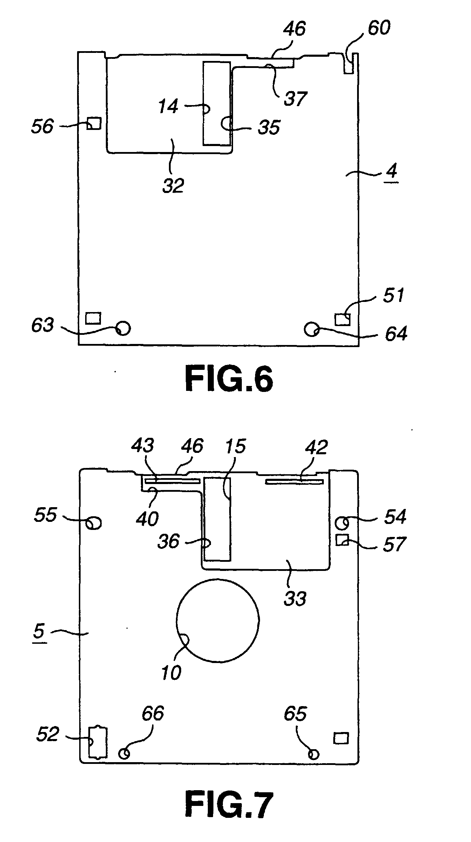

The upper shell 4 is formed with a recording/reproducing aperture 14 for exposing at least a portion of a signal recording area of the magnetic disc 2 housed in the disc container to outside across the inner and outer rims of the disc, as shown in Figs.5 and 6. The lower shell 5 has a recording/reproducing aperture 15 for exposing at least a portion of a signal recording area of the magnetic disc 2 housed in the disc housing to outside the housing casing 3 across the inner and outer rims of the disc, as shown in Figs.5 and 7. This recording/reproducing aperture 15 is provided facing the recording/reproducing aperture 14 provided in the upper shell 4. These recording/reproducing apertures 14, 15 are substantially rectangular in profile and are provided at a mid portion along the width of the upper shell 4 and the lower shell 5 for extending from a position neighboring to the opening 10 as far as the front side of the housing casing 3.

On the housing casing 3 is mounted a substantially T-shaped shutter member 22 for movement in the direction indicated by arrows A and B in Fig.4 for opening and closing the recording/reproducing apertures 14, 15. This shutter member 22 is molded from, for example, a metallic material, so as to have a substantially U-shaped cross-section, and is made up of shutter portions 23, 24 parallel to and facing each other, supporting portions 25, 26 disposed on both sides of the shutter portions 23, 24 n the direction of movement thereof, and a connecting portion 27 interconnecting the shutter portions 23, 24 and the supporting portions 25, 26, as shown in Fig.5.

The shutter portions 23, 24 are substantially rectangular in shape and sized to be slightly larger than the recording/reproducing apertures 14, 15, respectively. The supporting portions 25, 26 are provided with supporting pieces 25a, 25b and 26a, 26b facing and parallel to each other, as shown in Fig.5. The proximal ends of the supporting pieces 25a, 25b are interconnected via a connecting portion 27 to the proximal ends of the supporting pieces 26a, 26b and are formed to have a substantially U-shaped cross-section.

The supporting portions 25, 26 are formed with guide pieces 29, 30 formed by warping portions of the supporting pieces 25a, 25b substantially at right angles to the major surfaces of the supporting portions 25, 26. These supporting portions 25, 26 are movably carried by the lower shell 5. These guide pieces 29, 30 are formed as integral parts of the supporting pieces 25a, 25b for assuring mechanical strength.

The connecting portion 27 interconnects the proximal ends of the shutter portions 23, 24, while interconnecting the shutter members 23, 24 to the supporting portions 25, 26. The side of the supporting portion 25 of the connecting portion 27 is formed with a spring retainer 31 by folding back a portion of the inner section of the connecting portion 27, as shown in Fig.5. This spring retainer 31 carries an end of a shutter spring 34 provided at a corner on the front side of the housing casing 3. The shutter member 22 is biased by this shutter spring 34 into movement in the direction indicated by arrow A in Fig.4 so that the shutter members 23, 24 will close the recording/reproducing apertures 14, 15.

Referring to Figs.3 and 4, the shutter members 23, 24 are rectangular in shape and sized to be slightly larger than the recording/reproducing apertures 14, 15 for closing the apertures when the disc cartridge is not loaded on the recording/reproducing apparatus. Thus, if the present disc cartridge is not loaded on the recording/reproducing apparatus, the magnetic disc 2 is not exposed to outside of the recording/reproducing apertures 14, 15.

That is, if the disc cartridge 1 is not loaded on the recording/reproducing apparatus, the shutter member 22 closes the recording/reproducing apertures 14, 15 to prevent dust and dirt from entering the inside of the disc housing via the recording/reproducing apertures 14, 15 so as to be deposited on the magnetic disc 2 as well as to prevent the magnetic disc from being scratched by foreign matter from outside.

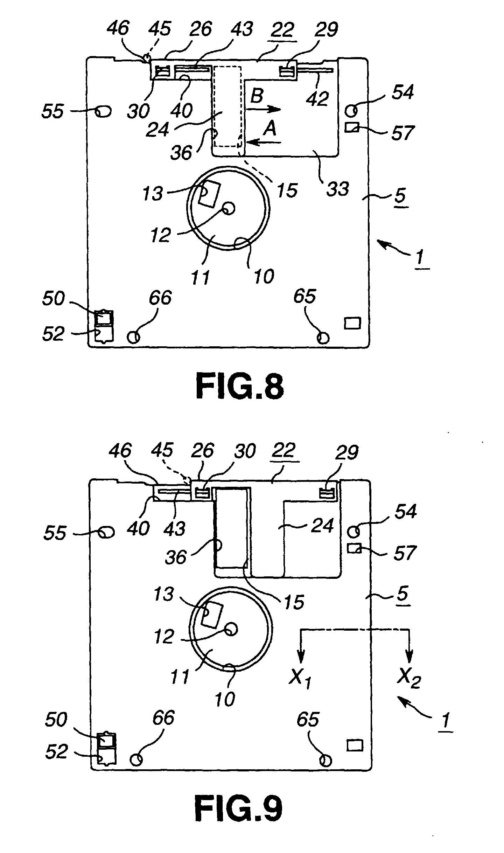

Also, when the disc cartridge 1 is loaded on the recording/reproducing apparatus, the shutter member 22 is engaged by a shutter driving member 45 of the recording/reproducing apparatus. This shutter driving member 45 is moved along the front side of the housing casing 3. That is, the shutter driving member 45 causes the shutter member 22 to be moved in the direction indicated by arrow B in Figs.4 and 8 along the housing casing 3 against the bias f the shutter spring 34. This opens the recording/reproducing apertures 14, 15 to expose the magnetic disc 2 to outside via the recording/reproducing apertures 14, 15.

Referring to Figs.6 and 7, there are formed guide recesses 32, 33 for guiding the shutter portions 23, 24 of the shutter member 22 around the recording/reproducing apertures 14, 15, as shown in Figs.6 and 7. These guide recesses 32, 33 are formed with abutting surfaces 35, 36 on which are abutted one ends of the shutter portions 23, 24 of the shutter member 22 when the shutter member 22 is in the position of closing the recording/reproducing apertures 14, 15. These abutting surfaces 35, 36 are formed so as to be adjacent to the ends of the recording/reproducing apertures 14, 15 along the width-wise direction. When the recording/reproducing apertures 14, 15 are closed by the shutter member 22, the one ends of the shutter portions 23, 24 of the shutter member 22 compress against the abutting surfaces 35, 36.

The upper shell 4 is also formed with a guide recess 37 for guiding the supporting piece 26a of the supporting portion 26 of the shutter member 22, as shown in Fig.6. The lower shell 5 is formed with a guide recess 40 for guiding the supporting piece 26b of the supporting portion 26 of the shutter member 22 along the direction of movement of the shutter member 22, as shown in Fig.7.

The guide recess 33 of the lower shell 5 is formed with guide grooves 42, 43 for extending along the direction of movement of the shutter member 22. In these guide grooves 42, 43 are movably introduced the guide pieces 29, 30 of the supporting pieces 25b, 26b of the shutter member 22.

On the front sides of the upper shell 4 and the lower shell 5 are formed sliding surfaces 46 on which is slidingly contacted the shutter driving member 45 of the recording/reproducing apparatus. These sliding surfaces 46 are formed for extending along the direction of movement of the shutter member 22.

Referring to Fig.5, a mistaken recording inhibiting member 50 for setting whether or not writing on the magnetic disc 2 is possible is movably arranged on the disc cartridge 1. This mistaken recording inhibiting member 50 is arranged for movement to a position in register with a detection hole 51 provided at the rear side corner of the upper shell 4, as shown in Fig.6, and to a position in register with an opening 52 provided at the rear corner of the lower shell 5, as shown in Fig.7.

Referring to Figs.4 and 7, the lower shell 5 is formed with a pair of positioning holes 54, 55 for setting its position relative to the cartridge loading portion of the recording/reproducing apparatus. When loaded on the recording/reproducing apparatus, the disc cartridge 1 is positioned with respect to the cartridge loading unit by the positioning projections of the recording/reproducing apparatus being introduced into the positioning holes 54, 55.

The upper shell 4 and the lower shell 5 are formed with discriminating through-holes 56, 57, so as to be adjacent to the positioning hole 54, for discriminating the recording capacity, for example, of the magnetic disc 2 housed therein. The upper shell 4 and the lower shell 5 are provided with discriminating recesses 63, 65 and discriminating recesses 64, 66 in the vicinity of the back side corners thereof for discriminating the recording capacity, for example, of the magnetic disc 2 housed therein.

The upper shell 4 is formed at a front side corner with a design parameter discriminating cut-out 60 so as to be opened on the front side. The design parameter discriminating cut-out 60 serves for discriminating the design parameters of the disc cartridge 1 loaded in the cartridge loading unit of the recording/reproducing apparatus.

The design parameters of the disc cartridge are detected depending on whether or not a design parameter detection member provided on the recording/reproducing apparatus can be inserted into the design parameter discriminating cut-out 60.

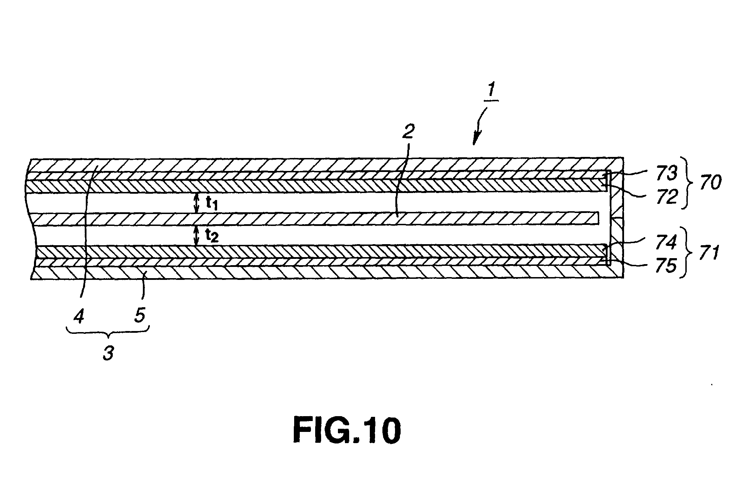

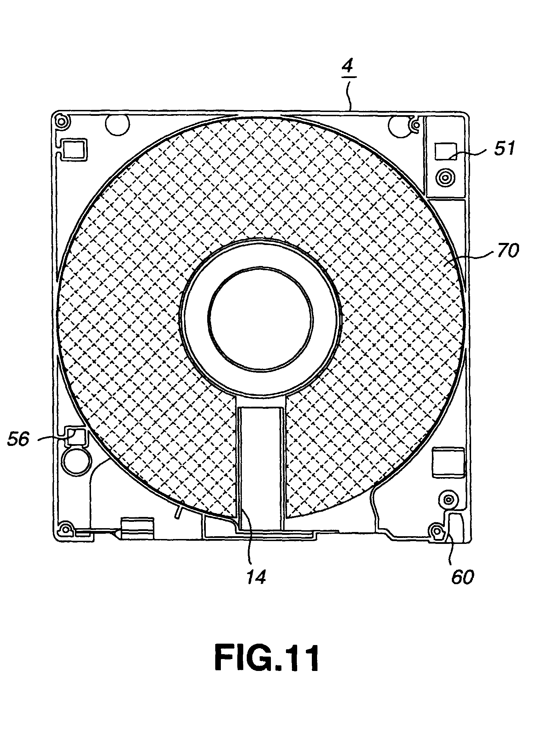

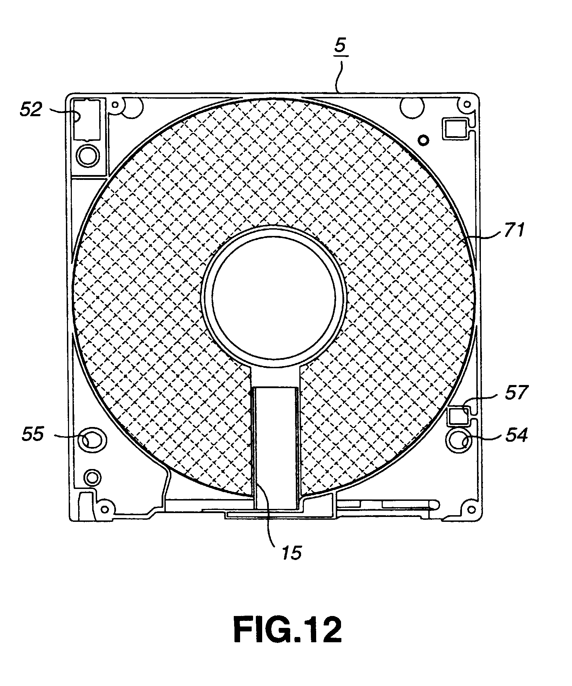

An upper liner 70 mounted on the upper shell 4 is arranged between the inner wall section of the upper shell 4 and the magnetic disc 2, as shown in Figs. 10 and 11. Similarly, a lower liner 71 mounted on the lower shell 5 is arranged between the inner wall section of the lower shell 5 and the magnetic disc 2, as shown in Figs.10 and 12. In Figs. 11 and 12, the upper liner 70 and the lower liner 71 are shown by cross-hatching. These upper and lower liners 70, 71are used to capture dust and dirt intruded into the housing casing 3 to prevent the captured dust and dirt from becoming affixed to the magnetic disc 2, and to prevent the magnetic disc 2 from having direct contact with the upper and lower shells of higher toughness to graze the disc. These upper and lower liners 70, 71are of substantially the same diameter as the magnetic disc 2 and are approximately annular in profile. The upper and lower liners 70, 71are each formed with a center opening larger in diameter than the center opening of the magnetic disc 2. The upper and lower liners 70, 71are formed with radial cut-outs extending from the outer rim towards the center openings thereof These cut-outs are slightly larger in size than the openings of the recording/reproducing apertures 14, 15 provided in the upper and lower shells 4, 5.

Meanwhile, in the conventional disc cartridge, the liners formed as non-woven fabrics are thermally fused to the shells by applying heat to a portion of the shells for fusing the shell with the liners being kept in pressure contact with the shells. The liners formed as non-woven fabrics are fine fibers with the diameter of the order of 10 to 20 µm entangled together so that many fiber pieces tend to be detached from the fractured surfaces.

Heretofore, since the liners of non-woven fabrics are thermally fused to the shells, the fibers making up the liners are severely damaged during thermal fusion. Especially, many fibers are fractured at edges of the pressure bonded portions. Thus, the fiber pieces tend to be detached from these edge portions, such that the liners used inherently to remove the dust and dirt sometimes operate as the source of generation of the dust and dirt.

Usually, the liners formed by non-woven fabrics are each an assembly of intertwined fibers and inherently hold a large quantity of dust and dirt such as fiber pieces. In the conventional disc cartridges, the liners as uplifted by a lifter so that the magnetic disc and the liners will be brought into contact during rotation of the magnetic disc. However, if the magnetic disc is contacted with the liners during rotation of the magnetic disc, the liners are oscillated by rotational vibrations transmitted from the liners, as a result of which the dust and dirt such as fiber pieces are dislocated from the liners. Thus, the liners used inherently to remove the dust and dirt sometimes operate as the source of generation of the dust and dirt.

However, since the conventional disc cartridge is lower in recording density such that the fiber pieces dislocated from the liners do not present serious problems. Conversely, should the recording capacity be increased by raising the recording density, even small-sized dust and dirt give rise to dropout, such that even dust and dirt such as fiber pieces dislocated from the liners do present problems.

Conventionally, the shells are fused for heat fusion when mounting the liners to the shells, so that half-fused shells tend to ooze to the liner surface during thermal fusion. The half-fused mass oozed out to the liner surface sometimes are contacted with and damage the magnetic disc.

Thus, with the disc cartridge 1 embodying the present invention, the upper liner 70 is of a dual-layer structure of a protective layer 72 and a thermally fusible layer 73, which is thermally fused to the entire surface of the upper shell 4 facing the magnetic disc 2 of the upper shell 4, while similarly the lower liner 71 is of a dual-layer structure of a protective layer 74 and a thermally fusible layer 75, which is thermally fused in its entirety to the surface of the lower shell 5 facing the magnetic disc 2.

It should be noted that the protective layers 72, 74 of the upper liner 70 and the lower liner 71 operate to capture dust and dirt intruded into the inside of the housing casing 3 to prevent the captured dust and dirt from damaging the magnetic disc 2, and are arranged facing the magnetic disc 2. These protective layers 72, 74 are formed by non-woven fabrics, such as nylon or rayon, and are of a thickness of, for example, 200 µm to 400 µm

On the other hand, the thermally fusible layer 73 of the upper liner 70 is used for thermally fusing the upper liner 70 to the upper shell 4 and is arranged facing the upper shell 4. Similarly, the thermally fusible layer 75 of the lower liner 71 is used for thermally fusing the lower liner 71 to the lower shell 5 and is arranged facing the magnetic disc 2. These protective layers 72, 74 are formed by materials fused on heating, specifically, a high-molecular material such as ethylene vinyl acetate or polyethylene. These thermally fusible layers 73, 75 are each of a thickness of, for example, 10 to 300 µm.

The upper liner 70 is thermally fused and bonded to the upper shell 4 by fusing the thermally fusible layer 73 thrust against the upper shell 4. Similarly, the lower liner 71 is thermally fused and bonded to the lower shell 5 by fusing the thermally fusible layer 75 thrust against the lower shell 5.

Thus, with the present disc cartridge, the upper liner 70 and the lower liner 71 are formed respectively by the protective layers 72, 74 and the thermally fusible layers 73, 75and are bonded to the upper shell 4 and the lower shell 5 by thermally fusing the thermally fusible layers 73, 75. Thus, with the present disc cartridge 1, the upper liner 70 and the lower liner 71 can be bonded to the upper shell 4 and to the lower shell 5, respectively, without damaging the protective layers 72, 74 facing the magnetic disc 2. Thus, with the present disc cartridge 1, there is no risk of dust and dirt being produced by damages produced on bonding the upper liner 70 and the lower liner 71 in position.

The softening point of the thermally fusible layers 73, 75 of the upper and lower layers 70, 71 is preferably lower than the softening point of the protective layers 72, 74 and also lower than the softening point of the upper and lower shells 4, 5. In this case, there is no risk of the protective layers 72, 74 layered on the thermally fusible layers 73, 75 or the upper and lower shells 4, 5 being softened during bonding the thermally fusible layers 73, 75 by thermal fusion to the upper and lower shells 4, 5 thus assuring facilitated and optimized bonding of the upper liner 70 and the lower liner 71.

Specifically, the protective layers 72, 74 of the upper and lower layers 70, 71 are each formed by a non-woven cloth of nylon fibers with a Vicat softening point of 110°C, while the thermally fusible layers 73, 75 of the upper and lower layers 70, 71 are formed by ethylene vinyl acetate or polyethylene with a Vicat softening point not higher than 80°C and the upper and lower shells 4, 5 are formed by acrylonitrile butadiene styrene resin (ABS resin) with a Vicat softening point not lower than 125 °C and a thermal deformation temperature not lower than 110°C.

With the upper liner 70 arranged at a preset position on the inner wall of the upper shell 4, the upper liner 70 is pressed against the upper shell 4 by a flat hole heated to a temperature such that only the thermally fusible layer 73 of the upper liner 70 is fused without the thermally fusible layer 73 being allowed to ooze onto the surface of the protective layer 72, specifically, to a temperature of approximately 100°C. This fuses only the thermally fusible layer 73 without the protective layer 72 or the upper shell 4 being softened to allow the thermally fusible layer 73 to be thermally fused to the upper shell 4.

With the lower liner 71 arranged at a preset position on the inner wall of the lower shell 5, the lower liner 70 is pressed against the lower shell 5 by a flat hole heated to a temperature such that only the thermally fusible layer 75 of the lower liner 71is fused without the thermally fusible layer 75 being allowed to ooze onto the surface of the protective layer 74, specifically to a temperature of approximately 100°C. This fuses only the thermally fusible layer 75 without the protective layer 74 or the lower shell 5 being softened to allow the thermally fusible layer 75 to be thermally fused to the lower shell 5.

Since heat fusion occurs so that only the thermally fusible layers 73, 75 are fused, the upper liner 70 and the lower liner 71 can be bonded to the upper shell 4 and to the lower shell 5, respectively,without damaging the protective layers 72, 74, so that there is no risk of removal of fiber pieces from the non-woven cloth making up the protective layers 72, 74 due to damages to the protective layers 72, 74.

Also, with the present disc cartridge 1, in which the entire surface of the upper liner 70 is bonded to the upper shell 4, the upper liner 70 is not contacted with the magnetic disc 2 on rotationally driving the magnetic disc 2, with a preset gap t1 being produced between the upper liner 70 and the magnetic disc 4. Similarly, the entire surface of the lower liner 71 is bonded to the lower shell 5, the lower liner 71 is not contacted with the magnetic disc 2 on rotationally driving the magnetic disc 2, with a preset gap t2 being produced between the upper liner 71 and the magnetic disc 2.

That is, with the present disc cartridge, there is no risk of the upper liner 70 or the lower liner 71 being contacted with the magnetic disc 2 during running in rotation of the magnetic disc. Thus, with the present disc cartridge 1, there is no risk of dust and dirt such as fiber pieces being detached and transferred from the upper liner 70 or the lower liner 71 due to contact of the upper liner 70 or the lower liner 71 with the magnetic disc 2 during running in rotation of the magnetic disc.

Also, with the present disc cartridge 1, since the entire surfaces of the upper liner 70 and the lower liner 71 are bonded to the upper shell 4 and to the lower shell 5, respectively, any height variations of magnetic disc facing surfaces of the upper liner 70 or the lower liner 71 can be reduced as compared to the case in which only portions of the upper liner 70 or the lower liner 71 are bonded to the upper shell 4 or to the lower shell 5. Stated differently, any size variations of the gap t1 between the upper liner 70 and the magnetic disc 2 can be reduced over the entire surface of the upper liner 70, while similarly any size variations of the gap t2 between the lower liner 71 and the magnetic disc 2 can be reduced over the entire surface of the lower liner 71.

The sizes of these gaps t1, t2 affect the extent of surface deviations incurred to the magnetic disc 2 on rotationally driving the magnetic disc 2. Therefore, should there be variations in the sizes of the gaps t1, t2, the magnetic disc 2 tends to undergo surface deviations. However, with the present disc cartridge, since the entire surfaces of the upper liner 70 and the lower liner 71 are bonded to the upper shell 4 and to the lower shell 5, respectively, any size variations in the gaps t1, t2 are reduced, so that surface deviations of the magnetic disc 2 can scarcely be produced.

Meanwhile, the upper liner 70 and the lower liner 71 are formed by applying a high-molecular material in a semi-molten state on a non-woven fabric. In this case, the non-woven fabric serves as the protective layers 72, 74, while the coated high-molecular material serves as the thermally fusible layers 73, 75. If the upper liner 70 and the lower liner 71 are formed by applying a high-molecular material in a semi-molten state on a non-woven fabric, the high-molecular material operates to prevent detachment of dust and dirt contained in the non-woven fabric, thus further suppressing formation of dust and dirt from the upper liner 70 and the lower liner 71.

With the present disc cartridge 1, since dust and dirt can be prevented rom being produced from the upper liner 70 or the lower liner 71, there is scarcely incurred dropout due to dust and dirt to enable the recording density to be increased further.

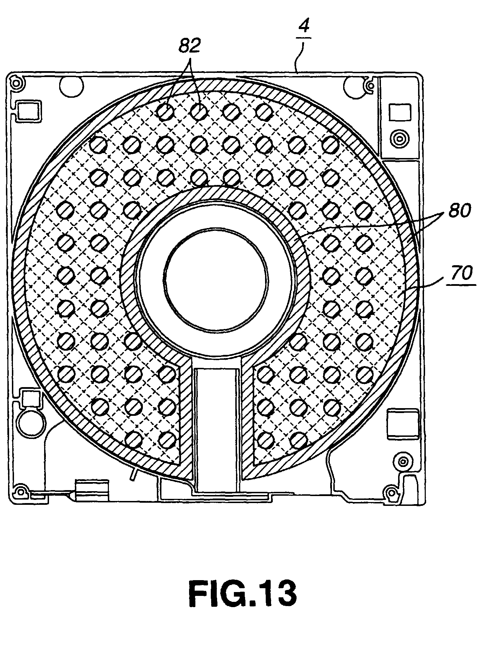

When the upper liner 70 and the lower liner 71 are thermally fused to the upper shell 4 and to the lower shell 5, it suffices to fuse only portions of the liners thermally without fusing their entire surfaces. Figs. 13 to 16 show examples of patterns of the thermally fused portions. In Figs. 13 to 16, the thermally fused portions are shown by hatching.

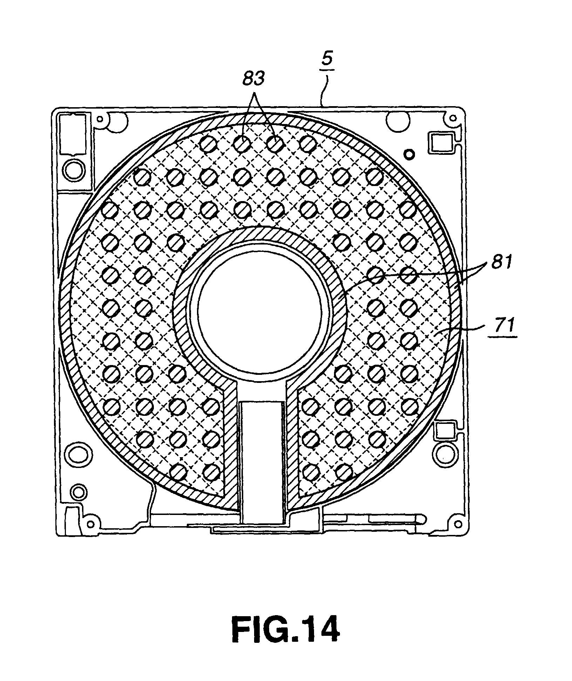

In the examples shown in Figs. 13 and 14, the thermally fused portions are pinpointed, with rim portions 80, 81 of the upper liner 70 and the lower liner 71 being thermally fused to the upper shell 4 and to the lower shell 5 and with plural portions 82, 83 in the planes of the upper liner 70 and the lower liner 71 being thermally fused as points on the upper shell 4 and to the lower shell 5.

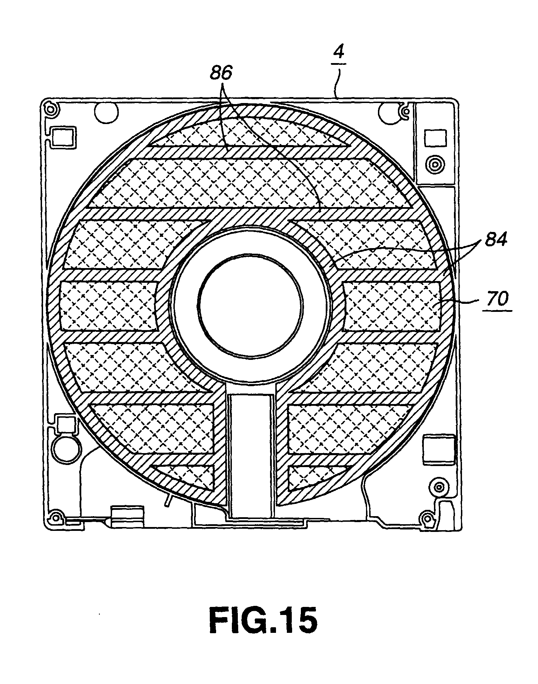

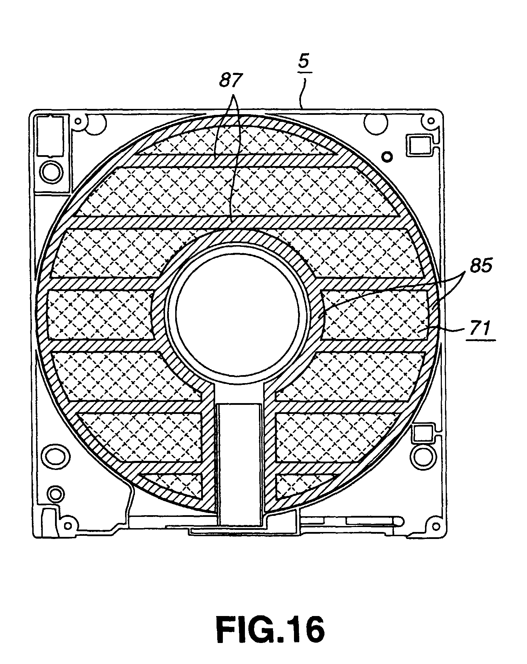

In the examples shown in Figs.15 and 16, the thermally fused portions are linearized, with rim portions 84, 85 of the upper liner 70 and the lower liner 71 being thermally fused to the upper shell 4 and to the lower shell 5 and with plural portions 86, 87 in the planes of the upper liner 70 and the lower liner 71 being thermally fused as lines on the upper shell 4 and to the lower shell 5.

If only portions of the upper liner 70 or the lower liner 71 are thermally fused, as shown in Figs.13, 14 or in Figs.15, 16, a smaller quantity of heat applied during thermal fusion suffices. If a larger quantity of heat is applied, the upper shell 4 or the lower shell 5 tends to be deformed, e.g., warped, during thermal fusion. If only portions of the upper liner 70 or the lower liner 71 are thermally fused, only a smaller quantity of heat applied during thermal fusion suffices, so that warping or the like deformation can scarcely be produced.

In the embodiments shown in Figs.13 to 16, there are left portions not thermally fused in the plane of the upper liner 70 or the lower liner 71. However, the rim portions of the upper liner 70 and the lower liner 71 are fused in their entirety. Thus, even if there are left non-fused portions in the planes of the upper liner 70 or the lower liner 71, there is no risk of uplifting of the rim portions of the upper liner 70 and the lower liner 71. Specifically, should patterns shown in Figs.13 to 16 be used for heat fusion, the upper liner 70 and the lower liner 71 can be bonded with a small heat quantity without the risk of up lifting of the rim portions of the upper liner 70 or the lower liner 71.

The protective layers 72, 74 may also be formed by materials other than the non-woven fabric. For example, these protective layers may also be constituted by sheets of small frictional coefficient, such as Teflon (trade name). Although the non-woven fabric has the effect of capturing dust and dirt, it may also operate as a source of dust and dirt. Conversely, should the protective layers 72, 74 be formed by a sheet of a small frictional coefficient, the magnetic disc 2 can be protected, without the possibility of the sheet operating as the source of dust and dirt.

With the present disc cartridge, the gap t2 produced between the lower liner 71 and the magnetic disc 2 on running the magnetic disc 2 in rotation is set so as to be larger than 0 mm and smaller than 0.5 mm, as shown in Fig.10. Since the gap t2 between the lower liner 71 and the magnetic disc 2 in the present disc cartridge 1 is of an extremely small magnitude, the air steam produced between the lower liner 71 and the magnetic disc 2 on running the magnetic disc 2 in rotation operates for suppressing surface deviations of the magnetic disc 2.

That is, with the present disc cartridge 1, it is difficult for surface deviations to be scarcely produced in the magnetic disc 2 under the effect of the air stream produced between the lower liner 71 and the magnetic disc 2. With the present disc cartridge, reduced surface deviations of the magnetic disc contribute to improving the recording density.

In the present disc cartridge 1, the gap t2 between the lower liner 71 and the magnetic disc 2 is narrowed. However, this gap is larger than 0 mm. The result is that the lower liner 71 is not contacted with the magnetic disc 2 on rotationally driving the magnetic disc 2. Therefore, with the present disc cartridge, there is no risk of the magnetic disc 2 being contacted with the lower liner 71 and thereby worn out on rotationally driving the magnetic disc 2.

It maybe the gap t1 between the upper liner 70 and the magnetic disc 2, instead of the gap t2 between the lower liner 71 and the magnetic disc 2. That is, it may be the gap t1 between the upper liner 70 and the magnetic disc 2 that is larger than 0 mm and smaller than 0.5 mm. In this case, surface deviations of the magnetic disc 2 may similarly be suppressed under the effect of the air steam produced between the upper liner 70 and the magnetic disc 2.

It is also possible to set both the gap t1 between the upper liner 70 and the magnetic disc 2 and gap t2 between the lower liner 71 and the magnetic disc 2 so as to be larger than 0 mm and smaller than 0.5 mm. In such case, the air stream produced in the gap t1 between the upper liner 70 and the magnetic disc 2 or in the gap t2 between the lower liner 71 and the magnetic disc 2, whichever is narrower, operates more strongly to further suppress surface deviations of the magnetic disc 2.

If the disc cartridge 1 is not loaded on a recording/reproducing apparatus, the shutter member 22 is moved in the direction indicated by arrow A in Fig.8, under the bias of the shutter spring 34, as shown in Fig.8, so that the recording/reproducing apertures 14, 15 are closed by the shutter portions 23, 24 of the shutter member 22. When closing the recording/reproducing apertures 14, 15, the one ends of the shutter portions 23, 24 along the direction of movement of the shutter portions 23, 24 compress against the abutting surfaces 35, 36.

The disc cartridge is loaded on the recording/reproducing apparatus in order to perform a recording/reproducing operation. When the disc cartridge 1 is loaded on the recording/reproducing apparatus, the shutter member 22 is moved by the shutter driving member 45 of the recording/reproducing apparatus to open the recording/reproducing apertures 14, 15. Specifically, when the disc cartridge 1 is loaded on the recording/reproducing apparatus, the shutter driving member 45 of the recording/reproducing apparatus compresses against one ends of the sliding surfaces 46 and against one ends of the supporting portion 26 of the shutter member 22. The shutter driving member 45 is moved along the sliding surfaces 46 in the direction indicated by arrow B in Fig.8 to cause movement of the supporting portion 26 of the shutter member 22 in the direction indicated by arrow B. With movement of the supporting portion 26, the shutter portions 23, 24 are moved to open the recording/reproducing apertures 14, 15.

Into the recording/reproducing apertures 14, 15, thus opened, is intruded a magnetic head of the recording/reproducing apparatus. When the disc cartridge 1 is loaded on the recording/reproducing apparatus, a turntable for running the magnetic disc 2 in rotation is intruded into the opening 10 for a circular table to secure the center hub 11 to the turntable.

With the magnetic disc 2 being run in rotation at an rpm in excess of 3000, specifically at an rpm of 3600, on the turntable, the magnetic head acts on the magnetic disc 2 for recording/reproduction.

Since the gap t2 between the lower liner 71 and the magnetic disc 2 is set in the present disc cartridge 1 to an extremely small value, the air stream flowing in the gap between the lower liner 71 and the magnetic disc 2 operates for suppressing surface deviations of the magnetic disc 2.

The results of scrutiny into surface deviations of the magnetic disc, obtained on actually running the magnetic disc in rotation, are hereinafter explained.

A dual-layer liner, made up of a protective layer and a thermally fusible layer, similarly to the upper liner 70 or the lower liner 71 used in the above-described disc cartridge 1, was bonded to a substrate having a smooth surface by thermally fusing the entire surface of the thermally fusible layer, and a magnetic disc was arranged on the liner. The gap between the liner and the magnetic disc was varied and measurements were made of the relation between the magnitude of the gap and the magnitude of surface deviations of the magnetic disc produced on running the magnetic disc in rotation. The magnetic disc used was of a diameter of 86.5 mm and was rotated at an rpm of 3600.

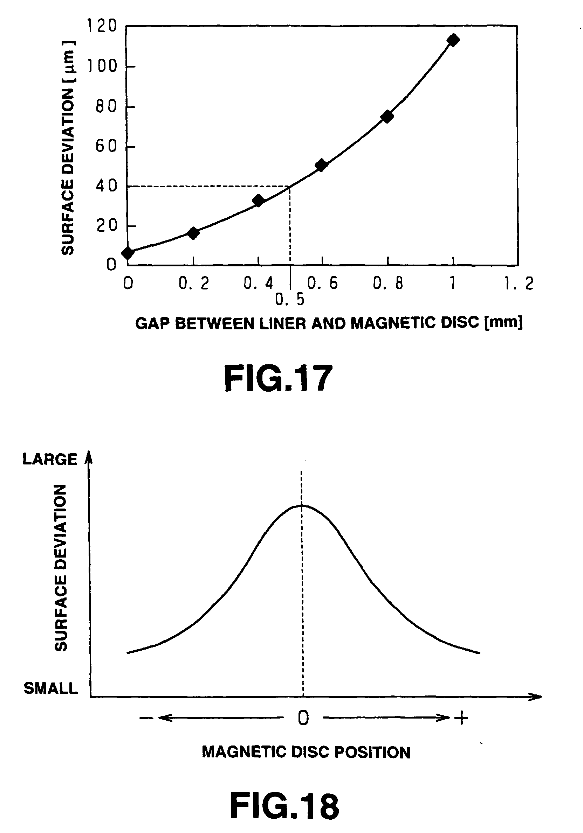

The results are shown in Fig.17, in which the abscissa and the ordinate stand for the magnitude of the gap between the liner and the magnetic disc and peak values of surface deviations at a radial position of 30.0 mm of the magnetic disc.

As may be seen from Fig.17, the smaller the gap between the liner and the magnetic disc, the smaller become surface deviations of the magnetic disc. The reason is that an air stream flowing in the gap between the liner and the magnetic disc suppresses surface deviations of the magnetic disc. Meanwhile, if the smaller the gap between the liner and the magnetic disc is set to 0 mm, surface deviations become minimum, however, the liner or the magnetic disc is attrited due to sliding contact between the liner and the magnetic disc to produce dust and dirt. It is therefore not desirable to set the gap to 0 mm.

It is noted that, for increasing the recording density of the magnetic disc, it is desirable to load the magnetic head on ahead slider to float the magnetic head slightly above the magnetic disc or to permit the magnetic head to be contacted with the magnetic disc in a substantially non-loaded state, as may be demonstrated from the results obtained on a hard disc device. If the magnetic head is loaded on the head slider for recording/reproduction, it is necessary to suppress the magnitude of surface deviations of the magnetic disc to approximately 40 µm or less. That is, for realizing high recording density of a magnetic disc, the magnetic disc is preferably loaded on a head slider for recording/reproduction and, to this end, the magnitude of surface deviations of the magnetic disc needs to be suppressed to approximately 40 µm or less.

As may be seen from Fig. 17, the magnitude of surface deviations of the magnetic disc can be suppressed to approximately 40 µm or less by setting the gap between the liner and the magnetic disc to 0.5 mm or less. Thus, by setting the gap between the liner and the magnetic disc to 0.5 mm or less, the magnitude of the surface deviations of the magnetic disc can be suppressed to a magnitude approximately 40 µm or less, which permits use of the head slider thus enabling high density recording with the use of the head slider. Specifically, by setting the gap between the liner and the magnetic disc to 0.5 mm or less, the capacity of the 3.5 inch magnetic disc of a disc cartridge can be set to 200 MB.

Although the liner is provided on only a surface of the magnetic disc in the above-described experiment, the magnetic disc 2 in the above-described disc cartridge is sandwiched between the upper liner 70 and the magnetic disc 2. Thus, the magnetic disc is affected by both an air steam produced between the upper liner 70 and the magnetic disc 2 and an air steam produced between the lower liner 71 and the magnetic disc 2. In this case, surface deviations of the magnetic disc 2 exhibit the tendency as shown in Fig. 18, depending on the disc position.

In Fig.18, the abscissa denotes the relative position between the magnetic disc 2 on one hand and the upper and lower liners 70, 71 on the other hand, with a reference position (0) of the magnetic disc 2 being a position in which the magnetic disc 2 is arranged between the upper liner 70 and the lower liner 71. The relative position of the magnetic disc 2 when the disc is moved towards the upper liner 70, that is when the magnetic disc 2 is moved so that the gap t1 between it and the upper liner 70 is smaller, with the gap t2 between the disc and the lower liner 71 being broader, is denoted as plus (+). Conversely, the relative position of the magnetic disc 2 when the disc is moved towards the lower liner 71, that is when the magnetic disc 2 is moved so that the gap t1 between it and the upper liner 70 is broader, with the gap t2 between the disc and the lower liner 71 being smaller, is denoted as minus (-).

If as shown in Fig.18, the magnetic disc 2 is arrayed at the position of the lower liner 71 (on the minus side position in Fig.18), surface deviations of the magnetic disc 2 are suppressed under the effect of the air stream between the lower liner 71 and the magnetic disc 2. As the magnetic disc 2 is moved away from the lower liner 71, the surface deviations of the magnetic disc 2 are increased because of the decreased effect of the air steam between the lower liner 71 and the magnetic disc 2 in suppressing the surface deviations. As the magnetic disc 2 is moved further away from the lower liner 71 until the magnetic disc 2 is towards the upper liner 70 (plus side position in Fig.18), surface deviations of the magnetic disc 2 are again decreased because the gap t1 between the magnetic disc 2 and the upper liner 70 is narrowed such that the air stream between the upper liner 70 and the magnetic disc 2 operates for suppressing surface deviations of the magnetic disc 2.

Thus, if, with the disc cartridge 1, the gap t1 between the magnetic disc 2 and the upper liner 70 or the gap t2 between the magnetic disc 2 and the lower liner 71 is set so as to be smaller than 0.5 mm, it is possible to suppress surface deviations of the magnetic disc 2. Meanwhile, it is also possible for both the gap t1 between the magnetic disc 2 and the upper liner 70 and the gap t2 between the magnetic disc 2 and the lower liner 71 to be smaller than 0.5 mm to suppress surface deviations of the magnetic disc 2. In this case, the air steam produced in the gap t1 between the upper liner 70 and the magnetic disc 2 or in the gap t2 between the lower liner 71 and the magnetic disc 2, whichever is narrower, operates more strongly to further suppress surface deviations of the magnetic disc 2.

Meanwhile, the gap t1 between the upper liner 70 and the magnetic disc 2 or the gap t2 between the lower liner 71 and the magnetic disc 2 can be adjusted by varying, for example, the entire thickness of the disc cartridge 1. If the entire thickness of the disc cartridge cannot be changed, the magnitudes of the gaps t1, t2 can be adjusted by varying the thickness of the upper shell 4 or the lower shell 5 or by varying the thickness of the protective layers 72, 74 making up the upper liner 70 or the lower liner 71 or that of the thermally fusible layers 73, 75.

Although the magnetic disc is used as a disc-shaped recording medium in the foregoing description, the present invention is also applicable to a disc cartridge employing an optical disc designed for recording and/or reproduction using an optical head. The optical disc herein means not only a read-only optical disc previously formed with embossed pits, but also a phase change optical disc adapted for recording and/or reproduction by exploiting phase changes of the recording layer and a magnetooptical disc capable of photomagnetic recording.

If an optical disc is used as a disc-shaped recording medium, in particular, if the objective lens of the optical head is loaded on ahead slider so that the gap between the objective lens and the optical disc is significantly reduced, it is critical to reduce the surface deviations of the optical disc. If the gap between the objective lens and the optical disc is reduced significantly in this manner, the adverse effect of extremely fine dust and dirt becomes salient. Thus, the present invention, capable of suppressing surface deviations of the optical disc and generation of dust and dirt, is effective for a disc cartridge housing an optical disc which is recorded and/or reproduced under a condition in which the objective lens of the optical head is loaded on ahead slider and the gap between the objective lens and the optical head is extremely narrow during recording and/or reproduction.

### Industrial Applicability

A disc cartridge is provided in which a gap produced between a container casing member housing a disc-shaped recording medium and the disc-shaped recording medium on rotation of the disc-shaped recording medium is made smaller to prevent surface deviations from being produced under the action of an air stream flowing between the container casing member and the disc-shaped recording medium. For this reason, with the present disc cartridge, surface deviations are less liable to occur in the disc-shaped recording medium to permit its stabilized rotation, so that the present disc cartridge provides a cartridge structure assuring particularly stable signal recording and reproduction in the realization of high density recording.

Moreover, since a liner is provided with a protective layer and a thermal fusing layer and the liner is bonded to a shell by thermally fusing the thermal fusing layer, the liner can be bonded without damaging the protective layer facing the disc-shaped recording medium. Therefore, there is no risk of powder debris being produced from the liner due to damage caused at the time of bonding the liner, so that signal dropout ascribable to powder debris from the liner is reduced and hence there is provided a high-quality cartridge structure in which errors may be reduced in high density recording.

## Claims

1. A disc cartridge comprising:
a disc-shaped recording medium for recording and/or reproduction on being run in rotation at an rpm exceeding 3000; and
a housing casing including a first housing casing member arranged towards one of the major surfaces of the disc-shaped recording medium and a second housing casing member arranged towards the other major surface of the disc-shaped recording medium, said housing casing housing the disc-shaped recording medium between said first housing casing and said second housing casing;
a gap between the disc-shaped recording medium and the first housing casing or a gap between the disc-shaped recording medium and the second housing casing, whichever is narrower, is set so as to be larger than 0 mm and smaller than 0.5 mm.

2. The disc cartridge according to claim 1 wherein at least one of the first housing casing member and the second housing casing member is provided with a liner bonded to a surface facing the disc-shaped recording medium.

3. The disc cartridge according to claim 2 wherein said liner has at least a protective layer facing and protecting the disc-shaped recording medium and a thermally fusible layer layered thereon and adapted to be fused on heating, said thermally fusible layer being thermally fused to effect bonding.

4. The disc cartridge according to claim 3 wherein the softening point of the thermally fusible layer is lower than the softening temperature of the protective layer layered on said thermally fusible layer, while being lower than the softening temperature of the portion of the housing casing member on which is bonded a liner having said thermally fusible layer.

5. The disc cartridge according to claim 3 wherein said liner is bonded by thermal fusion of the entire surface of the thermally fusible layer.

6. The disc cartridge according to claim 3 wherein said liner is bonded by thermal fusion of part of the surface of the thermally fusible layer.

7. A disc cartridge comprising:
a disc-shaped recording medium; and
a housing casing including a first shell arranged towards one of the major surfaces of the disc-shaped recording medium and a second shell arranged towards the other major surface of the disc-shaped recording medium, said housing casing being adapted for housing the disc-shaped recording medium between the first and second shells;
the surface of at least one of the first shell and the second shell facing the disc-shaped recording medium has a liner bonded thereto;
said liner having at least a protective layer facing and protecting the disc-shaped recording medium and a thermally fusible layer layered thereon and adapted to be fused on heating, said thermally fusible layer being thermally fused to effect bonding.

8. The disc cartridge according to claim 7 wherein the softening point of the thermally fusible layer is lower than the softening temperature of the protective layer layered on said thermally fusible layer while bing lower than the softening temperature of the shell to which is bonded the liner having the thermally fusible layer.

9. The disc cartridge according to claim 7 wherein said liner is bonded to the shell by thermal fusion of the entire surface of the thermally fusible layer.

10. The disc cartridge according to claim 7 wherein said liner is bonded by thermal fusion of part of the surface of the thermally fusible layer.

11. The disc cartridge according to claim 7 wherein said disc-shaped recording medium is recorded and/or reproduced as it is run in rotation at an rpm exceeding 3000.

## Amended claims

### Amended claims under Art. 19.1 PCT

1. (Amended) A disc cartridge comprising:
a disc-shaped recording medium for recording and/or production on being run in rotation at an rpm exceeding 3000; and
a housing casing including a first housing casing member arranged towards one of the major surfaces of the disc-shaped recording medium and a second housing casing member arranged towards the other major surface of the disc-shaped recording medium, said housing casing housing the disc-shaped recording medium between said first housing casing and said second housing casing;
a gap between the disc-shaped recording medium and the first housing casing or a gap between the disc-shaped recording medium and the second housing casing, whichever is narrower, is set so as to be larger than 0 mm and smaller than 0.5 mm; said disc-shaped recording medium being in anon-contact state relative to the first and second housing casing members.
2. The disc cartridge according to claim 1 wherein at least one of the first housing casing member and the second housing casing member is provided with a liner bonded to a surface facing the disc-shaped recording medium.
3. The disc cartridge according to claim 2 wherein said liner has at least a protective layer facing and protecting the disc-shaped recording medium and a thermally fusible layer layered thereon and adapted to be fused on heating, said thermally fusible layer being thermally fused to effect bonding.
4. The disc cartridge according to claim 3 wherein the softening point of the thermally fusible layer is lower than the softening temperature of the protective layer layered on said thermally fusible layer, while being lower than the softening temperature of the portion of the housing casing member on which is bonded a liner having said thermally fusible layer.
5. The disc cartridge according to claim 3 wherein said liner is bonded by thermal fusion of the entire surface of the thermally fusible layer.
6. The disc cartridge according to claim 3 wherein said liner is bonded by thermal fusion of part of the surface of the thermally fusible layer.
7. A disc cartridge comprising:
a disc-shaped recording medium; and
a housing casing including a first shell arranged towards one of the major surfaces of the disc-shaped recording medium and a second shell arranged towards the other major surface of the disc-shaped recording medium, said housing casing being adapted for housing the disc-shaped recording medium between the first and second shells;
the surface of at least one of the first shell and the second shell facing the discshaped recording medium has a liner bonded thereto;
said liner having at least a protective layer facing and protecting the disc-shaped recording medium and a thermally fusible layer layered thereon and adapted to be fused on heating, said thermally fusible layer being thermally fused to effect bonding.
8. The disc cartridge according to claim 7 wherein the softening point of the thermally fusible layer is lower than the softening temperature of the protective layer layered on said thermally fusible layer while bing lower than the softening temperature of the shell to which is bonded the liner having the thermally fusible layer.
9. The disc cartridge according to claim 7 wherein said liner is bonded to the shell by thermal fusion of the entire surface of the thermally fusible layer.
10. The disc cartridge according to claim 7 wherein said liner is bonded by thermal fusion of part of the surface of the thermally fusible layer.
11. The disc cartridge according to claim 7 wherein said disc-shaped recording medium is recorded and/or reproduced as it is run in rotation at an rpm exceeding 3000.
